# EUROPÄISCHE PATENTSCHRIFT

(11) **EP 2 457 464 B1**
(45) Veröffentlichungstag und Bekanntmachung des Hinweises auf die Patenterteilung: **17.05.2017**
(21) Anmeldenummer: 11184460.1
(22) Anmeldetag: 10.10.2011
(51) Int. Cl.: A46B 11/00, A61C 19/06

(54) **Innengespeister Applikator**
Internally fed applicator
Applicateur alimenté par l'intérieur

(30) Priorität: 26.11.2010 EP 10192699
(43) Veröffentlichungstag der Anmeldung: 30.05.2012
(73) Patentinhaber: Sulzer Mixpac AG, 9469 Haag (CH)
(72) Erfinder: Habibi-Naini, Sasan, Dr., 8486 Rikon (CH); Ettlin, Josef, 9453 Eichberg (CH)
(74) Vertreter: Manitz Finsterwald Patentanwälte PartmbB

(56) Entgegenhaltungen:
- EP-A1- 0 278 828
- EP-A1- 0 945 368
- WO-A1-2007/073917
- WO-A1-2009/100285
- DE-U1- 20 114 390
- US-A- 5 098 291
- US-A1- 2009 123 217

## Beschreibung

Die Erfindung betrifft einen innengespeisten Applikator zum Auftragen eines Fluids gemäss dem Oberbegriff des unabhängigen Patentanspruchs.

Ein innengespeister Applikator gemäß dem Oberbegriff des Anspruchs 1 ist aus der WO 2009/100285 A1 bekannt. Überdies sind innengespeiste Applikatoren beispielsweise in der EP 0 278 828 A1, EP 0 945 368 A1, WO 2007/073917 A1, DE 201 14 390 U1, US 2009/0123217 A1 oder US 5,098,291 A offenbart.

Innengespeiste Applikatoren werden beispielsweise in der Dentaltechnik eingesetzt, um fliessfähige Substanzen auf die Zähne eines Patienten aufzubringen. Dies kann zum Beispiel eine Bleaching-Substanz sein, mit welcher die Zähne weiss gemacht werden, eine Substanz zur professionellen Fluorisierung der Zähne oder ein Abformmaterial, mit welchem präzise Abdrücke von Zähnen oder Gebissabschnitten hergestellt werden. Hierbei gibt es sogenannte Ein-Komponentensysteme, bei denen das aufzubringende Fluid nur aus einer Komponente besteht oder Zwei- bzw. Mehrkomponentensysteme, bei denen das aufzubringende Fluid zwei oder mehr Substanzen umfasst, die erst unmittelbar vor der Applikation miteinander in Kontakt gebracht und vermischt werden. Die Komponente bzw. die Komponenten sind üblicherweise in einer oder mehreren Vorratskammern einer Austragsvorrichtung vorgesehen und werden dann für die Applikation ausgetragen. Beispiele solcher Austragsvorrichtungen sind Spritzen oder Doppelspritzen.

Im Falle nur einer Komponente weist die Austragsvorrichtung üblicherweise eine Düse, eine Tülle oder eine Nadel auf, über welche das Fluid ausgetragen wird. Im Falle zweier oder mehrerer Komponenten weist die Austragsvorrichtung einen meist rörenförmig ausgestalteten statischen Mischer auf, dessen Eingang mit den Vorratskammern verbunden ist, sodass die verschiedenen Komponenten aus den Vorratskammern in den statischen Mischer gelangen, bei dessen Durchfliessen sie zu einer homogenen Substanz vermischt werden, die dann am Ausgang des Mischers zur Applikation austritt.

Für die vorangehend genannten Anwendungen ist es dabei häufig so, dass der Ausgang des Mischers oder der Düse zu grob ist, um eine gezielte und präzise Applikation zu ermöglichen. Es sind daher Applikatoren bekannt, beispielsweise Breitschlitzdüsen, die als sogenannte IOT (intra oral tip) auf den Ausgang des Mischers bzw. der Düse oder der Nadel aufgesetzt werden, um so eine genauere Applikation zu ermöglichen.

Ein anderer Anwendungsfall, für den das gesagte in sinngemäss gleicher Weise gilt, sind einkomponentige oder mehrkomponentige Klebstoffe, die sehr genau aufgebracht werden müssen.

Auch wenn sich solche Applikatoren, die auf den Ausgang eines Mischers oder einer Düse aufgesetzt werden in der Praxis sehr bewährt haben, so besteht für viele Anwendungen noch ein Verbesserungsbedarf. So ist es beispielsweise beim Bleaching oder beim Fluoriesieren von Zähnen wünschenswert, das zu applizierende Fluid sehr homogen und flächig als dünne Schicht auf eine vorgegebene Fläche aufzutragen. Hierbei kommt es oft auch auf einen trennscharfen, möglichst dünnen Auftrag an. Dies ist mit den bekannten Applikatoren wie Breitschlitzdüsen aber nur bedingt realisierbar. In der Regel bedarf es anschliessender weiterer Arbeitsschritte, um einen homogenen flächigen Auftrag zu ermöglichen.

Ausgehend von diesem Stand der Technik ist es daher eine Aufgabe der Erfindung, einen Applikator zum Auftragen eines Fluids vorzuschlagen, der einen bequemen, schnellen, feinen, gleichmäßigen und sauberen flächigen Auftrag eines Fluids beispielsweise in der Dentaltechnik oder bei Verklebungen ermöglicht.

Der diese Aufgabe lösende Gegenstand der Erfindung ist durch die Merkmale des unabhängigen Patentanspruchs gekennzeichnet.

Erfindungsgemäss wird also ein innengespeister Applikator zum Auftragen eines Fluids vorgeschlagen, mit einem Verschlussstück zum vorzugsweise verrastenden Festsetzen des Applikators auf einer Austragsvorrichtung und mit einem mit dem Verschlussstück flüssigkeitsleitend verbundenen, innen hohlen Tüllenabschnitt, der an mindestens einem der Ränder, die seine freie Mündung umgrenzen, einen Borstenbesatz aus an den Tüllenabschnitt angespritzten Borsten mit einem Durchmesser von jeweils höchstens 0,8 mm aufweist, auf den das über ihn herangeführte Fluid ausgegeben wird.

Insbesondere ist die Erfindung für nicht-kosmetische Fluide geeignet. Mit dem Begriff "nicht-kosmetisches Fluid" sind dabei solche Fluide gemeint, die nicht für das Auftragen als Kosmetikum auf Haut oder Haare bestimmt sind. Nicht-kosmetische Fluide im Sinne der vorliegenden Anmeldung sind insbesondere solche Fluide für dentale Anwendungen wie beispielsweise Abformmassen, Bleaching-Substanzen oder Substanzen für die Fluorierung von Zähnen oder Substanzen für andere Behandlungen der Zähne oder des Zahnfleischs sowie Klebstoffe, insbesondere für industrielle oder medizinische Zwecke (Gewebekleber) oder für den Heimwerkerbedarf.

Die Borsten des erfindungsgemäß vorgesehenen Borstenbesatzes sind dabei ausgesprochen fein, weil sie nur einen Durchmesser von höchstens 0,8 mm aufweisen. Vorzugsweise ist der Durchmesser sogar noch kleiner und beträgt höchstens 0,5 mm und im Idealfall sogar höchstens 0,35 mm.

Soweit von einem Borstendurchmesser die Rede ist, wird davon ausgegangen, dass die Borsten im Querschnitt im Wesentlichen (bis auf Toleranzabweichungen) rund sind. Die Verwendung von im Wesentlichen runden Borsten ist fertigungstechnisch am einfachsten und wird daher bevorzugt. Erfindungsgemäß können aber beispielsweise auch ovale bzw. elliptische Borsten zum Einsatz kommen, oder sogar anderweitig profilierte Borsten. Zum Beispiel solche, die einen X-förmigen Querschnitt aufweisen. Der angegebene Borstendurchmesser wird dann als mittlerer Durchmesser verstanden, d. h. als Durchmesser desjenigen Kreises, dessen Fläche der Querschnittsfläche des entsprechenden Borstenprofils entspricht, beispielsweise des X-förmigen Borstenprofils.

Die erfindungsgemäßen Applikatoren sind im Regelfall Einweg-Applikatoren, die zusammen mit dem Teil der Austragsvorrichtung, mit dem sie verbunden sind, also beispielsweise mit einer Tülle oder einem Mischers, nach der Applikation entsorgt werden.

Die feinen Borsten sind vorzugsweise spritzgegossen und werden idealerweise in einem Zug mit dem Tüllenabschnitt gespritzt.

Vorzugsweise umgibt der Borstenbesatz die Mündung rundum. Hierdurch wird verhindert, dass bei ungeschickter Handhabung eventuell Fluid abtropft, weil es an den Borsten vorbeifließt.

Im Rahmen einer bevorzugten Ausführungsform ist vorgesehen, dass die überwiegende Zahl der den Borstenbesatz bildenden Borsten und vorzugsweise alle Borsten eine Borstenmittellinie aufweisen, die im Wesentlichen parallel zur Mittellinie des Tüllenabschnitts verläuft. Solche Borsten ermöglichen ein optimales Applikationsverhalten und bereiten bei der Herstellung des Tüllenabschnitts die geringsten Schwierigkeiten.

Gleiches gilt für die bevorzugte Ausführungsform, welche vorsieht, dass die Borsten bevorzugt überhaupt nicht oder zumindest nicht wesentlich in oder vor den Austrittsquerschnitt der Mündung des Tüllenabschnitts ragen.

Vorzugsweise ist zumindest einer der Ränder, am besten jedoch alle Ränder jeweils mit nur einer einzigen Reihe von den jeweiligen Rand entlang nebeneinander stehenden Borsten besetzt. Die Beschränkung auf einzelne Borstenreihen ermöglicht es, den Applikator ausgesprochen zierlich zu halten, was anwendungstechnische Vorteile bietet, wenn damit beispielsweise am Zahn oder Gebiss gearbeitet werden soll.

Im Rahmen der Erfindung liegen aber durchaus auch noch solche Applikatoren, bei denen zumindest einer der Ränder, am besten jedoch alle Ränder nicht nur mit einer einzigen Reihe von den jeweiligen Rand entlang nebeneinander stehenden Borsten besetzt ist bzw. sind, sondern mit bis zu drei parallelen derartigen Reihen. Allerdings sind derartige Ausführungsformen nicht bevorzugt, da es sich im Grunde genommen um verschlechterte Ausführungsformen handelt, jedenfalls dann wenn nicht nur lokal eine Mehrreihigkeit vorgesehen ist.

Im Rahmen einer bevorzugten Ausführungsform ist vorgesehen, dass zumindest die überwiegende Zahl der Borsten und vorzugsweise alle Borsten eine Länge von höchstens 5,5 mm, vorzugsweise von höchstens 4,5 mm, besonders bevorzugt von höchstens 3,5 mm und idealerweise von höchstens 2,8 mm aufweisen. Überraschenderweise hat sich erwiesen, dass derartig kurze Borsten von ihrer Effektivität beim Auftragen her längeren Borsten um nichts nachstehen. Die kürzeren Borsten sind aber haltbarer, insbesondere wenn es sich um spritzgegossene Borsten handelt. Denn längere Borsten werden beim Auftragen leicht überlastet und dann, spätestens wenn eine gewisse Ermüdung eingetreten ist, dauerhaft verbogen, so dass sie ungerichtet abstehen. Dies verleiht dem Applikator nicht nur ein unschönes Aussehen, sondern verschlechtert auch das Auftragsverhalten. Zudem sind die kürzeren Borsten leichter im Spritzguss zu fertigen, denn mit zunehmender Borstenlänge wächst die Gefahr, dass es beim Formen zum Abriss einer Zahl von Borsten kommt, was dann ein qualitativ minderes Erscheinungsbild bietet.

Im Rahmen einer anderen bevorzugten Ausführungsform ist vorgesehen, dass der Borstendurchmesser an der Borstenwurzel kleiner als die Wandstärke der Borsten tragenden Wand im Bereich der Borstenwurzel ist. Idealerweise ist der Borstendurchmesser um mindestens 30 % kleiner als die Wandstärke der borstentragenden Wand. Eine solche Ausgestaltung ermöglicht eine sichere Befestigung der Borsten an der sie tragenden Wand, insbesondere bei spritzgegossenen Borsten. Hier wird durch eine solche Ausgestaltung auch eine gute Ausformbarkeit gewährleistet.

Andererseits ist auch sehr vorteilhaft, wenn die Wandstärke der die Borsten tragenden Wand lediglich so dick ist, dass die Wandstärke in etwa im Bereich des Borstendurchmessers an der Borstenwurzei liegt. Das ist bei sehr großzügiger Betrachtung dann der Fall, wenn die Wandstärke maximal das 3-fache des Borstendurchmessers an der Borstenwurzel beträgt. Vorzugsweise ist die Wandstärke geringer und beträgt lediglich maximal das 2-fache und idealerweise sogar lediglich maximal das 1,5-fache des Borstendurchmessers an der Borstenwurzel.

Im Rahmen einer anderen bevorzugten Ausführungsform ist vorgesehen, dass die Borsten zuvor jeweils in nur einer Reihe den jeweiligen Rand entlang aufgestellt sind, dass jedoch zwischen benachbarten Borsten ein gewisser Versatz vorgesehen ist, so dass beispielsweise die einer ersten Borste benachbarten zweiten Borsten jeweils um mindestens 1/3 Borstendurchmesser in Richtung quer zum Wandverlauf zu der ersten Borste versetzt angeordnet sind.

Für einen feinen Auftrag ist es für manche Fluide vorteilhaft, wenn das Borstenfeld vorzugsweise mehr als 18, besser mehr als 26 Borsten aufweist. Mit einer solchen Mindestanzahl von Borsten wird die für einen Applikator erforderliche Auftragsgenauigkeit für alle Anwendungsfälle sichergestellt. Es gilt, dass im Zweifelsfall lieber dünnere Borsten und dafür eine größere Anzahl von Borsten vorzusehen ist.

Es macht jedoch schon aus Fertigungsgesichtspunkten keinen Sinn, die Anzahl der Borsten des erfindungsgemäßen Applikators beliebig groß zu halten. Daher besteht das Borstenfeld bei bevorzugten Ausführungsformen aus weniger als 90 und bevorzugter aus weniger als 60 Borsten. In manchen Fällen ist es sinnvoll weniger als 45 oder 44 Borsten vorzusehen.

Erfindungsgemäß ist vorgesehen, dass sich der Durchmesser bzw. die Breite des Tüllenabschnitts von dem Verschlussstück hin zur freien Mündung des Tüllenabschnitts in wenigstens einer Ebene erweitert.

Hierdurch wird eine recht gute Dosierbarkeit des Fluids sichergestellt, da der sich erweiternde Tüllenabschnitt im Bedarfsfall dazu in der Lage ist, auch eine zu große Menge an durch die engste Stelle des Tüllenabschnitts gedrückten Kosmetikums aufzunehmen und sozusagen "zwischenzulagern". Außerdem ergeben sich hierdurch fertigungstechnische Vorteile. In diesem Sinne sieht eine andere bevorzugte Ausführungsform vor, dass der Winkel relativ zur Mittelachse des Tüllenabschnitts, um den sich der Tüllenabschnitt hin zu seiner freien Mündung erweitert, ein gewisses Maß erreicht, jedoch höchstens 25 Grad und vorzugsweise höchstens 15 Grad misst. Eine derartige moderate Aufweitung des Tüllenabschnitts hat sich als am günstigsten erwiesen.

Erfindungsgemäß ist der Tüllenabschnitt als Flachkanal gestaltet, dessen durchströmbare Breite B wesentlich größer als dessen durchströmbare Höhe H ist. Von "wesentlich größer" im Sinne der Erfindung wird gesprochen, wenn das Verhältnis mindestens 2,5 zu 1, besser mindestens 3 zu 1 und idealerweise mindestens 4 zu 1 ist.

Vorzugsweise ist es so, dass die Höhe H in Richtung von der Wurzel hin zur Mündung des Tüllenabschnitts zumindest geringfügig zunimmt, sinnvollerweise um mindestens 2 %.

Die erfindungsgemäße Mündung weist, wandungsinnenseitig gemessen, in einer ersten Richtung eine durchströmbare Breite MB von ≥ 2,5 mm und ≤ 25 mm auf, wobei die durchströmbare Breite MB im Regelfall ≤ 20 mm sein kann, und noch bevorzugter zwischen ≥ 3 mm und ≤ 10 mm liegen kann. Wandungsaußenseitig weist die Tülle dann ein um die doppelte Wandstärke größeres Maß auf, d. h. ein Maß, das um mindestens 1,4 mm und maximal 2,5 mm größer ist.

Ebenfalls besonders bevorzugt ist die Ausführungsform, bei der die Mündung, wandungsinnenseitig gemessen, in einer zweiten, zu einer ersten Richtung senkrechten Richtung eine durchströmbare Höhe H von ≥ 0,4 mm und ≤ 2,5 mm, besser von ≥ 0,4 mm und ≤ 1,5 mm, noch besser ≤ 1,1 mm aufweist. Für das wandungsaußenseitige Maß gilt oben Gesagtes entsprechend.

Ein derart ausgelegter Applikator ist ausgesprochen feingliedrig und daher bestens für den präzisen Auftrag geeignet.

Im Rahmen einer anderen bevorzugten Ausführungsform ist vorgesehen, dass der Tüllenabschnitt (bezogen auf seine, im wesentlichen seiner Flüssigkeitsleitrichtung entsprechenden Längsachse) einen Winkel von 15 Grad bis 90 Grad und vorzugsweise einen Winkel von 15 Grad bis 55 Grad oder 50° relativ zur Mittelachse des Verschlussstücks, die im Regelfall der Mittelachse des Vorratsbehälters entsprechen wird, aufweist. Eine solche Ausgestaltung erlaubt eine besonders griffgünstige Handhabung des Applikators. Insbesondere ist es bei der typischerweise auf einer Spritze oder Kartusche erfolgenden Verwendung des Applikators nicht erforderlich die Spritze oder Kartusche allzu stark zu neigen, um applizieren zu können oder diese gar so weit zu neigen, dass permanent Fluid in den Bereich des Borstenbesatzes nachläuft.

Bei einer möglichen Ausführungsform weist der Tüllenabschnitt von seiner Wurzel bis zu seiner Mündung (gerechnet ohne Borstenbesatz) eine Länge von ≥ 70 mm und besser von ≥ 90 mm auf, wobei die Länge vorzugsweise begrenzt und dann zugleich ≤ 160 mm oder idealerweise ≤ 140 mm ist. Ein derart langer und vorzugsweise unter Beachtung der oben genannten Breiten- und Höhenmaße ausgesprochen schlank ausgestalteter Tüllenabschnitt erleichtert die Anwendung in manchen Fällen, da die Austragsvorrichtung nicht bis dicht an das Gesicht herangeführt werden muss, sondern mit einigem Abstand vom Gesicht gehalten werden kann. Dies lässt die Anwendung auch als angenehmer empfunden werden.

Vorzugsweise weist das Verschlussstück einen Rastabschnitt zur Verrastung mit einem Rücksprung in der Tülle oder dem Mischer einer Austragsvorrichtung auf. Ein solch feiner Applikator, wie er im Rahmen der Erfindung zur Diskussion steht, lässt sich häufig wesentlich einfacher auf der Austragsvorrichtung befestigen, indem er dort verrastet wird, anstatt dadurch, dass an dem Applikator eine Schraubkappe angespritzt wird.

Im Rahmen einer bevorzugten Ausführungsform ist vorgesehen, dass das Verschlussstück eine Umfangsfläche aufweist, die dazu bestimmt ist, im montierten Zustand in im Wesentlichen radialer Richtung elastisch vorgespannt gegen eine Komplementärfläche an der Austragsvorrichtung anzuliegen. Eine solche Umfangsfläche ist also so ausgestaltet, dass sie durch Einschieben des Applikators in den Ausgang (z. B. Tülle, Nadel, Mischer) der Austragsvorrichtung diesem gegenüber elastisch verspannt wird, wodurch eine Abdichtung hergestellt wird.

Vorzugsweise weist der Applikator bzw. sein Verschlussstück eine Stirnfläche senkrecht zu seiner Längsachse auf. Diese Stirnfläche ist dazu bestimmt im montierten Zustand gegen eine Komplementärfläche an der Austragsvorrichtung anzuliegen. Vorzugsweise, aber nicht zwingend tritt auch hier eine elastische Vorspannung bzw. Verspannung auf, insbesondere inaxialer Richtung.

Idealerweise wird der Applikator opak-durchscheinend ausgeführt. Damit ist gemeint, dass der Applikator derart durchscheinend ist, dass von Aussen erkennbar ist, ob er von dem Fluid durchströmt wird. Der Anwender kann dann sehen, wie sich beim Austragen das Fluid langsam durch den Tüllenabschnitt hindurch bis zu dessen Mündung bewegt. Dies verhindert gerade bei einem derart filigranen Applikator, wie er im Rahmen der Erfindung zur Diskussion steht, dass der Benutzer zunächst übermäßig stark Fluid austrägt unter dem Eindruck "es tut sich ja gar nichts", woraufhin dann, nach etwas Zeitverzug, schließlich eine übergroße Menge Fluid an der Mündung austritt.

Im Rahmen einer besonders bevorzugten Ausführungsform ist vorgesehen, dass der innenliegende Kanal des Applikators zum Heranführen des Fluids an die Mündung des Tüllenabschnitts durch zwei sich gegenseitig treffende Schieber geformt und ausgestaltet worden ist, von denen vorzugsweise der eine lokal in eine Öffnung des anderen eingetaucht ist. Eine solche Ausgestaltung, die entsprechende Spuren an dem Applikator hinterlässt, hat enorme fertigungstechnische Vorteile. Denn das ganze Bauteil kann durch Spritzguss hergestellt werden. Dabei wird ein größerer Schieber von derjenigen Seite des Applikators her eingeschoben, der für den Anschluss an die Austragsvorrichtung bestimmt ist. Ein kleinerer Schieber wird von der Mündungsseite des Tüllenabschnitts her in diesen eingeschoben, trifft den erstgenannten Schieber und greift schließlich in eine komplementäre Öffnung des erstgenannten Schiebers ein.

Weitere Vorteile, Ausgestaltungsmöglichkeiten, vorteilhafte Massnahmen und Wirkungsweisen des erfindungsgemäßen Applikators ergeben sich anhand des nachfolgend mit Hilfe einiger Zeichnungen geschilderten Ausführungsbeispiels und aus den abhängigen Ansprüchen. In der Zeichnung zeigen:
- Fig. 1: eine Seitenansicht eines Ausführungsbeispiels eines erfindungsgemäßen Applikators;
- Fig. 1a: das gleiche erste Ausführungsbeispiel, das die Fig. 1 zeigt, aber im Maßstab 1:1 dargestellt;
- Fig. 2: eine Ansicht des von Fig. 1 gezeigten Applikators von vorn;
- Fig. 3: eine perspektivische Ansicht des von den Figuren 1 und 2 gezeigten Applikators, allerdings mit einem anderen Maßstab dargestellt als die Figuren 1 und 2;
- Fig. 4: einen Schnitt durch den erfindungsgemäßen Applikator gemäß Fig. 1;
- Fig. 5: einen weiteren Schnitt durch den Tüllenabschnitt des von Fig. 4 gezeigten Applikators, wie die Figuren 4 und 5 sind sie in unterschiedlichen Maßstäben gezeigt, weisen aber beide einen größeren Maßstab auf als die Figuren 1 bis 3;
- Fig. 6: einen Applikator gemäß einer der vorhergehenden Zeichnungen, der sich unter dem Einfluss der bei der Applikation auftretenden Kräfte verformt.
- Figuren 7-10: ein zweites Ausführungsbeispiel aus mehreren unterschiedlichen Perspektiven, bei dem sich die Mündung durch eine konvexe Krümmung auszeichnet.
- Figuren 11-14: ein drittes Ausführungsbeispiel aus mehreren unterschiedlichen Perspektiven, bei dem der Tüllenabschnitt, zumindest aber die Mündung, gekammert ist.
- Figuren 15-18: ein viertes Ausführungsbeispiel aus mehreren unterschiedlichen Perspektiven, bei dem sich die Mündung durch seine konkave Krümmung bzw. Balligkeit auszeichnet.

Vorab ist festzuhalten, dass die von den Ausführungsbeispielen gezeigten Borsten vorzugsweise einstofflich, d.h. aus einem Stück mit ihrem Borstenträger bzw. dem gesamten Applikator im Spritzguss hergestellt werden. Dabei werden die borstenformenden Kanäle so effektiv entlüftet und die Schmelze mit einem derart hohen Druck in die borstenformenden Kanäle eingeschossen, dass sich innerhalb jeder Borste eine deutliche Molekülorientierung in Richtung der Längsachse der Borste einstellt. Die derart spritzgegossenen Borsten verhalten sich daher ähnlich wie ein Filament bzw. ein gerecktes Filament. Gerade dies ermöglicht es so feine und doch so widerstandsfähige Borsten herzustellen, wie man für die Erfindung benötigt.

Gegebenenfalls können die Borsten auch im sogenannten 2-K-Verfahren hergestellt werden, indem beispielsweise zunächst ein gelochter Borstenträger (der integraler Bestandteil des gesamten Applikator sein kann) hergestellt wird, durch dessen Löcher die Borsten dann in einem zweiten Schritt hindurchgespritzt werden. Die oben, im vorhergehenden Absatz beschriebenen Gesichtspunkte werden auch hierbei beachtet.

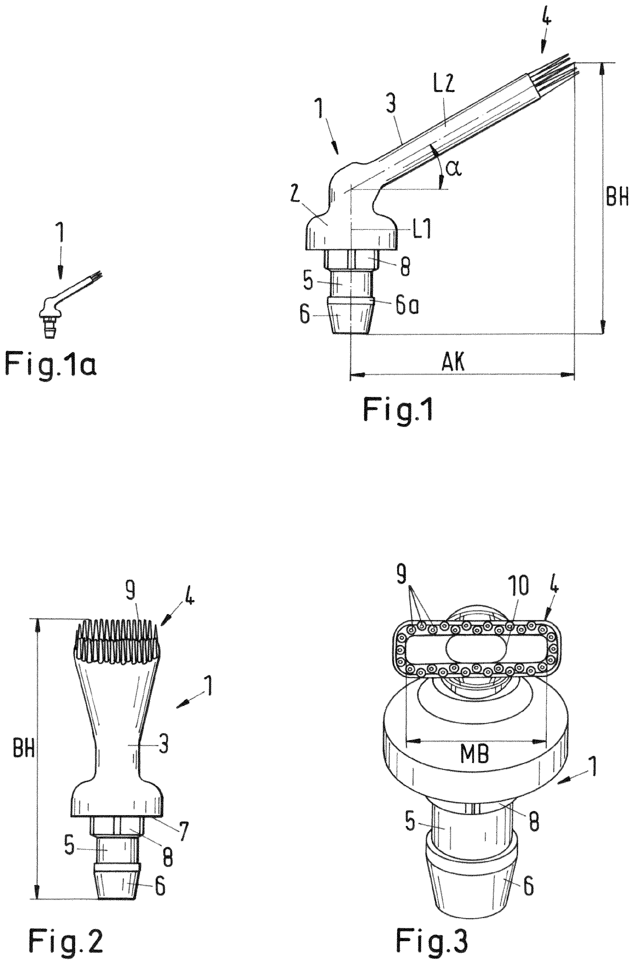

Die Figur 1 zeigt den Applikator 1 gemäß des ersten Ausführungsbeispiels in starker Vergrößerung, während der dieses erste Ausführungsbeispiel bildende Applikator 1 von der Fig. 1 a im Maßstab 1:1 dargestellt wird. Da der Applikator zur Verwendung als Dentalpplikator bestimmt ist, ist er ausgesprochen zierlich gestaltet.

Im Folgenden wird auf den für die Praxis besonders wichtigen Fall eines Applikators für die Dentaltechnik, einen Dentalapplikator, Bezug genommen. Die Verwendung als Dentalapplikator ermöglicht das genaue, flächige und dünnschichtige Auftragen fluider Substanzen auf Zähne oder Gebissabschnitte eines Patienten. Der Dentalapplikator wird auf den Ausgang einer Austragsvorrichtung aufgesetzt, die beispielsweise eine Spritze, eine Doppelspritze oder mindestens eine Kartusche umfasst. Im Falle eines Einkomponentensystems wird der Ausgang der Austragsvorrichtung üblicherweise durch eine Tülle, eine Düse oder eine Nadel gebildet, im Falle eines Zwei- oder Mehrkomponentensystems ist der Ausgang der Austragsvorrichtung üblicherweise ein statischer Mischer, der ein Mischerrohr umfasst, an dessen Ende die zwei oder mehr Komponenten als homogene, durchmischte Substanz austreten.

Neben der Verwendung in der Dentaltechnik sind weitere für die Praxis relevante Anwendungen die (industrielle) Verklebung, bei welcher ein oder mehrkomponentige Klebstoffe auf eine vorgegebene Fläche aufgebracht werden müssen.

Anhand der Fig. 1 ist ein Verschlussstück 2 deutlich zu erkennen, welches einen Rohrabschnitt 5 und einen Widerhaken 6 aufweist, um formschlüssig mit einem entsprechenden Ausgang einer Austragsvorrichtung oder einer entsprechenden Anschlusskupplung für eine Austragsvorrichtung verbunden werden zu können. Wie gut zu erkennen ist, schließt sich an das Verschlussstück 2 ein Tüllenabschnitt 3 an. Der Tüllenabschnitt trägt an seinem distalen, d. h. dem Verschlussstück 2 abgewandten Ende einen Borstenbesatz 4. Der Borstenbesatz besteht vorzugsweise ausschließlich aus einer Anzahl im Wesentlichen gleich langer Borsten.

Das Verschlussstück weist eine Umfangsfläche 8 auf, die dazu gedacht ist unter elastischer Vorspannung in den Ausgang der Austragsvorrichtung eingeführt zu werden und, zumindest zusätzlich zu dem Widerhaken 6, abzudichten. Auch der Widerhaken dichtet ab. Er weist zu diesem Zweck eine Widerhakenabdichtfläche 6a auf. Darüber hinaus ist am Verschlussstück 2 eine stirnseitige Anlagefläche 7 vorgesehen, die gegen die Stirnseite des Ausgangs der Austragsvorrichtung anliegt.

Gut zu erkennen sind auch die Längsachse L1 des Verschlussstücks und die Längsachse L2 des Tüllenabschnitts. Beide Längsachsen sind zugleich auch die Längsachsen des jeweiligen Kanals in dem Tüllenabschnitt 3 und dem Verschlussstück 2. Wie man sieht, treffen sich die Längsachsen im Bereich der Stelle, an der der Tüllenabschnitt 3 in das Verschlussstück 2 übergeht.

Die Fig. 3 verdeutlicht die Dimensionen der erfindungsgemäßen Applikatoren gemäß des ersten Ausführungsbeispiels mit Hilfe der Mündungsbreite MB, d. h. der Länge der beiden längsten der die Mündung berandenden Wände. Wie man sieht, sind die erfindungsgemäßen Applikatoren auf Grund ihrer Bestimmung zur Verwendung beispielsweise als Dentalapplikatoren sehr kompakt ausgeführt. Für dieses Ausführungsbeispiel gilt : 2,5 mm ≤ MB ≤ 12 mm. Vorzugsweise gilt sogar 2,5 mm ≤ MB ≤ 8 mm

Wie man sieht, steht der Tüllenabschnitt 3 in einem Winkel α schräg von dem Verschlussstück 2 ab. Der Applikator weist im konkreten Fall eine Auskragung AK von ca. 12,5 mm auf; generell kann man sagen, dass die erfindungsgemäßen Applikatoren eine Auskragung AK zwischen 5 mm und 20 mm, wesentlich besser zwischen 9 mm und 16 mm haben sollten.

Gleichzeitig hat der Applikator eine Bauhöhe BH von ca. 15,5 mm, generell lässt sich sagen, dass die erfindungsgemäßen Applikatoren eine Bauhöhe von 8 mm bis 18 mm, besser von 10 mm bis 16 mm haben sollten.

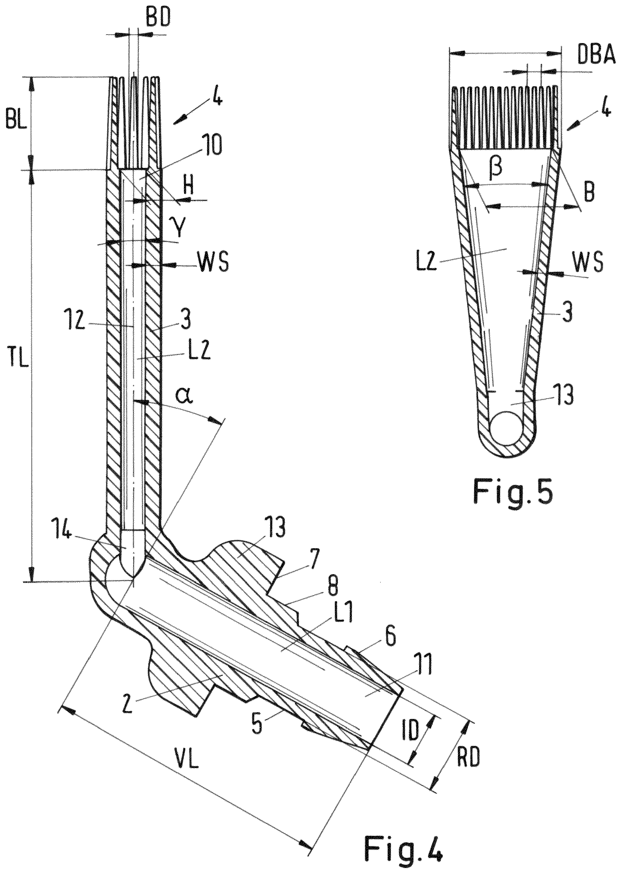

Die Fig. 4 illustriert das sog. Maß der Tüllenlänge TL. Bei Applikatoren, die auf eine Austragsvorrichtung aufgesetzt im Mundbereich zum Einsatz kommen, ist es vorteilhaft, wenn der Anwender die Vorratskammers der Austragsvorrichtung nicht bis unmittelbar an oder in der Mund heranführen muss, was als unangenehm empfunden wird. Auf Grund dessen sollte für die Tüllenlänge TL ≥ 8 mm gelten. Vorzugweise gilt sogar TL ≥ 10 mm, idealerweise gilt TL ≥ 12 mm.

Die Figur 2 zeigt den von der Figur gezeigten Applikator von vorne. Erstmals ist hier zu sehen wie die Mündung 10 des Applikators rundum von dem Borstenfeld bzw. Borstenbesatz 4 berandet wird. Schon an dieser Figur ist zu sehen, dass das Borstenfeld aus einer einzigen Reihe an Borsten 9 besteht, die auf der die Mündung 10 berandenden Stirnfläche des Tüllenabschnitts "aufgestellt" sind.

Nähere Einzelheiten sieht man in der Figur 3. Hier ist insbesondere zu sehen, dass die Borsten 9 zwar in einer Reihe rund um die Stirnfläche aufgestellt sind. Die Borsten beranden die Mündung 10. Die Borsten stehen jedoch nicht absolut alle in einer Flucht, sondern sind wechselweise zueinander versetzt. Hier beträgt der Versatz jeweils ca. einen halben Borstendurchmesser (im Fußbereich der Borste). Hierdurch wird der Borstenbesatz bei gleichem Borstendurchmesser von der Tendenz her insgesamt stabiler, z. B. knickunempfindlicher und in seiner Applikationscharakteristik etwas fester. Generell lässt sich sagen, dass der Versatz vorzugsweise im Bereich zwischen 1/4 des Borstendurchmessers und ca. 4/4 des Borstendurchmessers, bzw. besser nur 3/4 des Borstendurchmessers liegen sollte. Ein noch größerer Borstenabstand als der Genannte lässt zu große Freiräume zwischen den einzelnen Borsten entstehen und beeinträchtigt daher das Applikationsergebnis, während noch kleinere Borstenabstände als die Genannten dazu führen, dass benachbarte Borsten unter dem Einfluss des Fluids zu leicht miteinander verkleben und daher ebenfalls das Applikationsergebnis beeinträchtigen. Diese Regel gilt auch dort, wo nicht ein einreihiger sondern ein mehrreihiger Borstenbesatz vorgesehen ist.

Gleichzeitig sieht man hier, dass der Borstendurchmesser im Fußbereich kleiner ist als die Wandstärke des Tüllenabschnitts unmittelbar an ihrem distalen Ende. Im Einzelfall, d. h. anders als die Figur 3 zeigt, können auch zwei oder drei Reihen von Borsten rundum die die Mündung 10 begrenzende Stirnfläche des Tüllenabschnitts 3 aufgestellt sein. Bevorzugt ist dies jedoch nicht, da die Berandung des Tüllenabschnitts 3 dann zu dick zu werden droht.

Weitere Details sind anhand der Figur 4 zu erkennen, die einen Schnitt des von Figur 1 dargestellten Applikators zeigt.

Gut zu erkennen ist hier wieder das Verschlussstück 2 mit seinem Rohrabschnitt 5, seinem Widerhaken 6 und seiner zum dichtenden, vorzugsweise radial vorgespannten Eingriff mit dem Ausgang der Austraggsvorrichtung vorgesehenen Umfangsfläche 8 sowie seiner stirnseitigen Anlagefläche 7, die bestimmungsgemäß zur Anlage an eine entsprechende Stirnfläche des Ausgangs der Austraggsvorrichtung gedacht ist. Natürlich kann der Applikator auch zum Aufstecken auf eine Kupplungseinrichtung ausgestaltet sein, die dann an den Ausgang des Austraggeräts angekuppelt wird.

Gut zu erkennen ist auch, dass das Verschlussstück 2 einen Versteifungsring 13 in Längsrichtung in Gestalt einer ca. 1,5 mm bis 3 mm breiten in Umfangsrichtung umlaufenden Rippe aufweist. Dieser Bereich stellt den festesten Bereich des Applikators 1 dar und dient vorzugsweise zur Handhabung des Applikators zumindest im Verlauf der Fertigung, d. h. zum Aufpressen und vorzugsweise Verrasten des Applikators auf dem Ausgang der Austragsvorrichtung bzw. zur Wiederabnahme. Dieser Versteifungsring stützt den Applikator gleichzeitig sehr gut gegenüber der Stirnfläche des Ausgangs der Austragsvorrichtung ab, sobald beispielsweise über den Tüllenabschnitt 3 ein Biegemoment auf das Verschlussstück 2 übertragen wird, welches dieses aufzufangen und in den Ausgang der Austragsvorrichtung abzuleiten hat. Die Länge VL des Verschlussstücks beträgt im konkreten Fall ca. 8 mm, generell lässt sich sagen, dass die Länge des Verschlussstücks zwischen 5 mm und 15 mm liegen sollte, vorzugsweise zwischen 6 mm und 11 mm.

Der Außendurchmesser RD des Rohrabschnitts 5, der zum Einführen in den Ausgang der Austragsvorrichtung gedacht ist, beträgt im konkreten Fall 2,25 mm. Generell lässt sich für Dentalapplikatoren sagen, dass dieser Außendurchmesser kleiner oder gleich 9 mm , vorzugsweise kleiner oder gleich 7,5 mm sein sollte. Für andere Anwendungen kann es günstig sein, wenn der Aussendurchmesser zwischen 1,8 mm und 5 mm liegt oder besser noch zwischen 1,8 mm und maximal 3 mm. Der Innendurchmesser ID des das Verschlussstück 2 durchgreifenden Kanalabschnitts 11, der kreisrund ausgestaltet ist, beträgt im konkreten Fall 1,6 mm und liegt vorzugsweise zwischen 1,3 mm und 4 mm, besser zwischen 1,3 mm und 2,6 mm. Für Dentalapplikatoren ist ein Innendurchmesser von höchstens 8 mm, vorzugsweise höchstens 7 mm bevorzugt.

Gut anhand der Fig. 4 zu erkennen ist auch, dass die Längsachse der einzelnen Borsten 9 im Wesentlichen parallel zu der Längsachse L2 des Tüllenabschnitts verläuft. Des Weiteren ist zu sehen, dass die Borsten im Neuzustand die Mündung 10 wirklich so beranden, dass sie nicht in den Bereich der Mündung 10 oder in den Vorraum der Mündung 10 hineinragen.

Die Borsten sind hier alle gleich lang. Dies ist bevorzugt, denn bei einer nur einreihigen Borstenanordnung ist andernfalls, wenn unterschiedlich lange Borsten vorgesehen werden, die Gefahr relativ groß, dass die längeren der Borsten zu wenig von den Nachbarborsten abgestützt werden und daher vorzeitig abknicken.

Gut zu erkennen ist auch der Borstendurchmesser BD im Fußbereich. Dieser ist in manchen Fällen ≤ 0,8 mm, liegt aber vorzugsweise noch deutlich darunter, nämlich bei ≤ 0,5 mm oder vorzugsweise sogar bei ≤ 0,35 mm bzw. idealerweise ≤ 0,25 mm. Als Borstenlänge BL hat sich im konkreten Fall eine Länge von 2,6 mm als ideal herausgestellt, generell kann man sagen, dass die Borstenlänge BL zwischen 1,9 mm und 4,5 mm liegen sollte.

Bei Vergleich der Figuren 4 und 5 kann man recht gut erkennen, dass der Tüllenabschnitt 3 als Flachkanal mit einer Breite B und einer Höhe H ausgebildet ist. Die Breite B dieses Flachkanals vergrößert sich von der Wurzel des Flachkanals hin zu deren Mündung deutlich, vorzugsweise kommt es zu mehr als einer Verdopplung der Breite B, dies gilt allgemein. In idealen Fällen kommt es sogar zu mehr als einer Verdreifachung der Breite B. Nur schwer anhand Figur 4 zu erkennen ist, dass sich auch die Höhe H des Flachkanals von der Wurzel des Tüllenabschnitts 3 zu dessen Mündung hin vergrößert. Verantwortlich hierfür ist der Winkel γ, d. h. die Tatsache, dass die Wände, die senkrecht zu der von Figur 4 gezeigten Schnittebene den innenliegenden Kanal 12 des Tüllenabschnitts bilden, nicht hundertprozentig parallel sind, sondern von der Wurzel des Tüllenabschnitts ausgehend um einen Winkel γ von ca. 0,5 Grad divergieren. Ganz allgemein lässt sich sagen, dass dieser Winkel γ zwischen 0,3 Grad und 3,5 Grad, vorzugsweise maximal 2,5 Grad liegen sollte.

Die Wandstärke WS des Tüllenabschnitts liegt vorzugsweise bei ca. 0,4 mm, generell lässt sich sagen, dass Wandstärken zwischen ca. 0,3 mm und ca. 0,6 mm ideal sind.

Wie man anhand der Figur 5 sieht, sind auch die Wände, die senkrecht zu dieser Schnittebene orientiert sind und hier den Flachkanal begrenzen, nicht parallel zueinander, sondern divergieren von der Wurzel ausgehend um einen Winkel β. Dieser Winkel β beträgt im vorliegenden Fall ca. 13 Grad. Ganz allgemein lässt sich sagen, dass der Winkel β zwischen 7,5 Grad und 30 Grad, vorzugsweise ≤ 20 Grad und idealerweise ≤ 17,5 Grad liegen sollte.

Wie man recht gut anhand der Figur 5 erkennen kann, besitzt der den Tüllenabschnitt 3 durchziehende Kanalabschnitt 12 im Bereich seiner Wurzel einen Abschnitt 14 innerhalb dessen der lichte Querschnitt des Kanalabschnitts 12 streckenweise gleich bleibt.

Die Figur 5 veranschaulicht auch den doppelten Borstenabstand DBA. Dieser beträgt im vorliegenden Ausführungsbeispiel ca. 0,6 mm, generell lässt sich sagen, dass der doppelte Borstenabstand DBA zwischen 0,4 mm und 0,8 mm liegen sollte.

Der von diesem Ausführungsbeispiel gezeigte Applikator ist aus LDPE (low density Polyethylen) gefertigt. LDPE ist hier ein bevorzugtes Material, das für einen derartigen Applikator optimale Eigenschaften aufweist, insbesondere wenn dieser als Einweg-Applikator gefertigt werden soll. Natürlich sind auch andere Kunststoffe zur Herstellung des Applikatore geeignet, beispielsweise PA (Polyamid) oder PP (Polypropylen).

Der von diesem Ausführungsbeispiel gezeigte, bevorzugt zu verwendende Applikator ist opak-durchscheinend. Hiermit ist gemeint, dass der Applikator vorzugsweise derart durchscheinend ist, dass von aussen erkannbar ist, ob und wie weit der Applikator vom Fluid durchströmt ist.

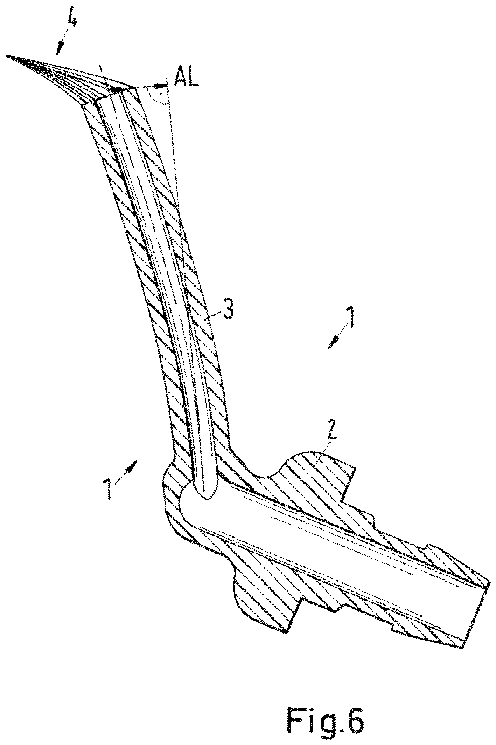

Sein Tüllenabschnitt ist derart elastisch bzw. flexibel, dass er sich in der von Figur 6 veranschaulichten Art und Weise auslenken lässt, nämlich mindestens um einen Betrag AL ≥ 1 mm, besser sogar um einen Betrag AL von ≥ 2 mm, idealerweise um einen Betrag von sogar ≥ 3 mm. Eine solche Elastizität bringt ein angenehmeres Anwendungsverhalten des Applikators mit sich, gerade bei Verwendung im Dentalbereich.

Vorzugsweise ist der Tüllenabschnitt 3 wenigstens in einer Ebene derart flexibel, dass die Mündung des Tüllenabschnitts 3 unter dem Einfluss der bei der Applikation auftretenden Kräfte um einen Betrag von mindestens 1,5 mm, besser von mindestens 2 mm und idealerweise um mindestens 3 mm elastisch federnd nachgeben kann;

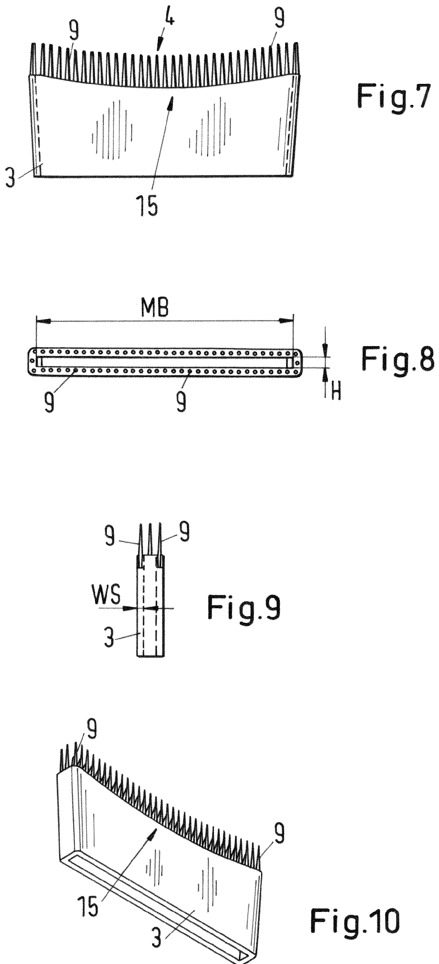

Die Figuren 7 bis 10 zeigen Abbildungen eines Endes eines Tüllenabschnitts, welches alternativ gestaltet ist, mithin ein zweites Ausführungsbeispiel. Ein solches Ende kann integraler Bestandteil des Tüllenabschnitts 3 sein oder aber als zunächst separater Vorsatz ausgebildet sein, der auf einen entsprechenden Kupplungsabschnitt einer Tülle aufgesetzt wird.

Der Tüllenabschnitt, zu dem dieses Ende gehört und auch der Rest des zugehörigen Applikators sind nicht zeichnerisch dargestellt, aber genauso ausgestaltet wie der zuvor beschriebene Tüllenabschnitt und sein Applikator. Das zuvor Gesagte gilt daher uneingeschränkt auch für dieses Ausführungsbeispiel, mit Ausnahme derjenigen Unterschiede, auf die nachfolgend ausdrücklich hingewiesen wird.

Der Mündungsbereich des hier gezeigten Tüllenabschnitts besitzt eine konkave, vorzugsweise sichelförmige Krümmung 15, d. h. eine Krümmung, die im Bereich der Mündungsmitte eine Einbauchung darstellt. Mit etwas anderen Worten ausgedrückt ist es so, dass die Öffnung der Mündung von einer (gedachten) konkaven Fläche überspannt wird.

Diese konkave, im figürlich dargestellten Ausführungsbeispiel sichelförmige Krümmung weist auch der Borstenbesatz auf, der vorzugsweise ausschließlich aus einer Anzahl im Wesentlichen gleich langer Borsten besteht. Der Tüllenabschnitt ist an seinem mündungsseitigen (distalen) Ende in etwa so breit wie ein menschliches Auge und mit seiner sichelförmigen Krümmung gut an den Verlauf des menschlichen Augenlids bzw. dessen Wimpernbogen angepasst. Aufgrund dessen ist dieser Tüllenabschnitt in besonderem Maß dazu prädestiniert einen innengespeisten Mascaraapplikator oder einen Applikator zum Aufbringen einer anderen Substanz auf das Augenlied zu bilden.

Gerade bei einem solchen Applikator ist es natürlich wichtig, dass der Applikator zwar breit genug ist, um den gesamten Wimpernbesatz eines Augenlids synchron behandeln zu können, aber ansonsten sehr zierlich ist. Aufgrund dessen ist hier der Mündungsbereich des Tüllenabschnitts so gestaltet, dass er unmittelbar im Bereich der Mündungsöffnung einen Flachkanal ausbildet, dessen lichte Breite B mindestens achtmal größer ist als dessen lichte Höhe H.

Die Fig. 8 verdeutlicht die Dimensionen der erfindungsgemäßen Applikatoren dieses zweiten Ausführungsbeispiels mit Hilfe der Mündungsbreite MB, d. h. der beiden längsten der die Mündung berandenden Wände. Wie man sieht, sind die erfindungsgemäßen Applikatoren auf Grund ihrer Bestimmung zur Verwendung als Applikatoren auch hier recht zierlich ausgeführt. Erfindungsgemäß gilt für dieses Ausführungsbeispiel bevorzugt: MB ≤ 25 mm.

Bemerkenswert ist dabei, dass die Spalthöhe H bei den Ausführungsbeispielen nach Muster des zweiten Ausführungsbeispiels signifikant kleiner als die Mündungsbreite MB ist. Vorzugsweise gilt, dass MB um mindestens den Faktor 8, besser noch mindestens um den Faktor 10 größer ist, als H. Eine solche Relation ist vorteilhaft, weil sie es zwar einerseits erlaubt Fluid in einem Arbeitsgang über eine größere Breite hinweg zu applizieren und andererseits aber den Durchflusswiderstand des Tüllenabschnitts soweit erhöht, dass wirklich nur die benötigte Menge des Fluids austritt.

Idealerweise ist ein solcher Applikator rundum nur einreihig mit Borsten besetzt, da er sonst zu klobig wird und auch meist keine gute Kämmwirkung mehr entfaltet. Vorzugsweise stehen diese Borsten entlang der Kante, von der aus sie abstehen, jeweils alle in einer Flucht, so wie man das anhand der Figuren sieht.

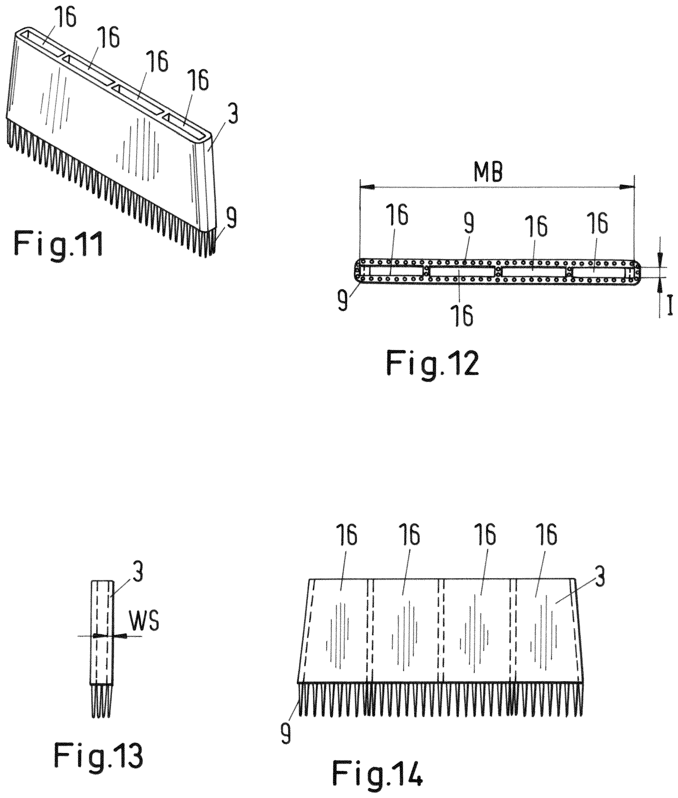

Die Figuren 11 bis 14 zeigen Abbildungen eines Endes eines Tüllenabschnitts, welches alternativ gestaltet ist, mithin ein drittes Ausführungsbeispiel. Ein solches Ende kann integraler Bestandteil des Tüllenabschnitts sein oder aber als Vorsatz ausgebildet sein, der auf einen entsprechenden Kupplungsabschnitt einer Tülle aufgesetzt wird.

Der Tüllenabschnitt, zu dem dieses Ende gehört und auch der Rest des zugehörigen Applikators sind nicht zeichnerisch dargestellt, aber genauso ausgestaltet wie der anhand der Fig. 2 bis 6 beschriebene Tüllenabschnitt und sein Applikator. Das für jenen Gesagte gilt daher uneingeschränkt auch für dieses Ausführungsbeispiel, mit Ausnahme derjenigen Unterschiede, auf die nachfolgend ausdrücklich hingewiesen wird. Der Ordnung halber ist zudem festzuhalten, dass natürlich auch der von den Fig. 11 bis 14 illustrierte Tüllenabschnitt eine konkave Krümmung aufweisen kann, wie zuvor anhand der Fig. 7 bis 10 beschrieben.

Zumindest der Mündungsbereich des hier gezeigten Tüllenabschnitts ist in mehrere nebeneinander, vorzugsweise "Schmalseite an Schmalseite" liegende Kammern 16 bzw. "Speiseleitungen" unterteilt.

Eine solche "Kammerung" fördert tendenziell, da sie eine gleichmäßigere Durchströmung erzwingt, die Gleichmäßigkeit des Auftrags und stabilisiert den schmalen Strömungsquerschnitt des Tüllenabschnitts. Letzteres ist insbesondere dann wichtig, wenn der Tüllenabschnitt federnd nachgiebig ausgestaltet ist, wie oben in Zusammenhang mit dem ersten Ausführungsbeispiel beschrieben.

Generell gilt, dass eine Aufteilung in zu viele Kammern 16 nicht sinnvoll ist, schon um einer eventuellen Verstopfung entgegenzuwirken und aus hygienischen Gründen. Daher sollte die Zahl der Kammern 16 auf maximal 6, besser maximal 4 parallele Kammern beschränkt werden.

Die Fig. 12 verdeutlicht die Dimensionen der erfindungsgemäßen Applikatoren dieses dritten Ausführungsbeispiels mit Hilfe der Mündungsbreite MB, d. h. der beiden längsten der die Mündung berandenden Wände. Wie man sieht, sind die erfindungsgemäßen Applikatoren auf Grund ihrer Bestimmung zur Verwendung als Applikatoren auch hier recht kompakt und klein ausgeführt. Erfindungsgemäß gilt für dieses Ausführungsbeispiel bevorzugt: MB ≤ 25 mm.

Bemerkenswert ist dabei wiederum, dass die Spalthöhe H bei den Ausführungsbeispielen nach Muster des zweiten Ausführungsbeispiels signifikant kleiner als die Mündungsbreite MB ist. Vorzugsweise gilt, dass MB um mindestens den Faktor 8, besser noch mindestens um den Faktor 10 größer ist als H. Eine solche Relation ist vorteilhaft, weil sie es zwar einerseits erlaubt das Fluid in einem Arbeitsgang über eine größere Breite hinweg zu applizieren und andererseits aber den Durchflusswiderstand des Tüllenabschnitts soweit erhöht, dass wirklich nur die benötigte Menge des Fluids austritt.

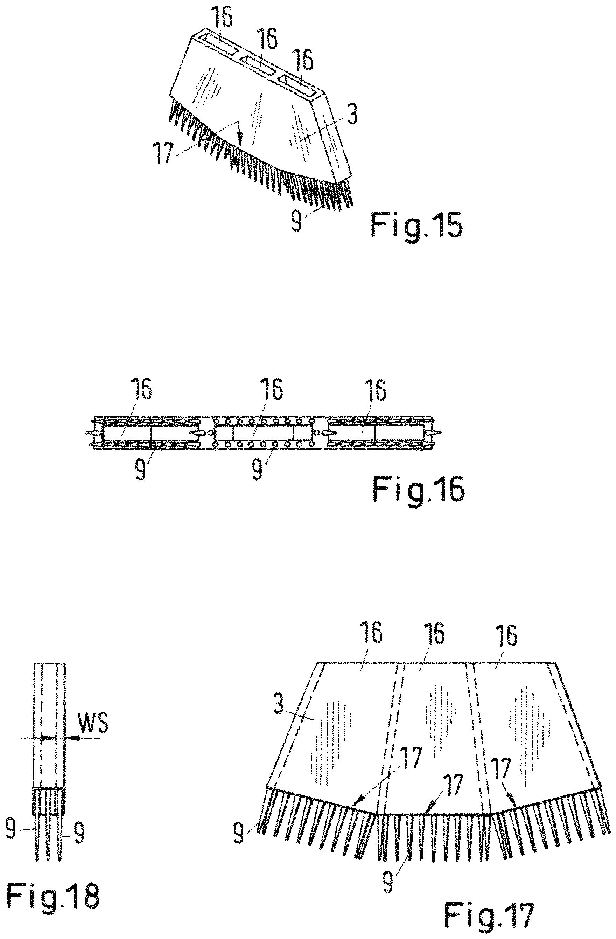

Die Figuren 15 bis 18 zeigen Abbildungen eines Endes eines Tüllenabschnitts, welches alternativ gestaltet ist, mithin ein viertes Ausführungsbeispiel. Ein solches Ende kann integraler Bestandteil des Tüllenabschnitts sein oder aber als Vorsatz ausgebildet sein, der auf einen entsprechenden Kupplungsabschnitt einer Tülle aufgesetzt wird.

Der Tüllenabschnitt, zu dem dieses Ende gehört und auch der Rest des zugehörigen Applikators sind nicht zeichnerisch dargestellt, aber genauso ausgestaltet wie der anhand der Fig. 2 bis 6 beschriebene Tüllenabschnitt und sein Applikator. Das für jenen Gesagte gilt daher uneingeschränkt auch für dieses Ausführungsbeispiel, mit Ausnahme derjenigen Unterschiede, auf die nachfolgend ausdrücklich hingewiesen wird.

Der Mündungsbereich des hier gezeigten Tüllenabschnitts besitzt eine im weitesten Sinne konvexe bzw. ballige Gestalt 17, d. h. eine Gestalt, die im Bereich der Mündungsmitte nach außen vorspringt. Mit etwas anderen Worten ausgedrückt ist es so, dass die Öffnung der Mündung von einer (gedachten) im weitesten Sinne balligen Fläche überspannt wird.

Das führt dazu, dass die Borsten des Borstenbesatzes mindestens gruppenweise in unterschiedliche Richtungen abstehen, vorzugsweise fächerförmig. Auf diese Art und Weise wird es für einfacher nur einen Teil des Borstenbesatzes mit der zu behandelnden Partie in Kontakt zu bringen. Dies kann einen trennscharfen Auftrag erleichtern, z. B. eines farbigen oder glänzenden Lippenkosmetikums oder eines Klebstoffs, der nur die genau dafür vorgesehene Fläche benetzen soll.

Vorzugsweise ist gerade auch bei dieser Ausführungsform eine Kammerung vorgesehen, so wie anhand des dritten Ausführungsbeispiels gemäß der Fig. 11 bis 14 beschrieben. Das zu jenen Figuren Gesagte gilt daher hier ebenfalls.

Für die Mündungsbreite MB und die Relation von MB und H Gesagte gilt auch hier das zum zweiten und dritten Ausführungsbeispiel Gesagte.

## Patentansprüche

1. Innengespeister Applikator (1) zum Auftragen eines Fluids, mit einem Verschlussstück (2) zum vorzugsweise verrastenden Festsetzen des Applikators (1) auf einer Austragsvorrichtung und mit einem mit dem Verschlussstück (2) flüssigkeitsleitend verbundenen, innen hohlen Tüllenabschnitt (3), der an mindestens einem der Ränder, die seine freie Mündung (10) umgrenzen, einen Borstenbesatz (4) aus an den Tüllenabschnitt (3) angespritzten Borsten (9) mit einem Durchmesser von jeweils höchstens 0,8 mm aufweist, auf den das über ihn herangeführte Fluid ausgegeben wird, wobei der Tüllenabschnitt (3) als Flachkanal gestaltet ist, dessen durchströmbare Breite (B) wesentlich größer als dessen durchströmbare Höhe (H) ist, wobei sich die Breite (B) des Tüllenabschnitts von dem Verschlussstück (2) hin zu einer freien Mündung (10) des Tüllenabschnitts (3) in wenigstens einer Ebene erweitert,
wobei die Mündung (10), wandungsinnenseitig gemessen, eine durchströmbare Breite (MB) von ≥ 2,5 mm und ≤ 25 mm aufweist.

2. Applikator (1) nach Anspruch 1, **dadurch gekennzeichnet, dass** der Borstenbesatz (4) die Mündung (10) rundum umgibt.

3. Applikator (1) nach einem der vorhergehenden Ansprüche, **dadurch gekennzeichnet, dass** zumindest die überwiegende Zahl der den Borstenbesatz (4) bildenden Borsten (9), vorzugsweise alle Borsten, eine Borstenmittellinie aufweisen, die im Wesentlichen parallel zur Mittellinie (L2) des Tüllenabschnitts (3) verläuft.

4. Applikator (1) nach einem der vorhergehenden Ansprüche, **dadurch gekennzeichnet, dass** zumindest einer der Ränder, vorzugsweise jedoch alle Ränder, jeweils nur eine Reihe von den jeweiligen Rand entlang nebeneinander stehenden Borsten (9) aufweist.

5. Applikator (1) nach einem der vorhergehenden Ansprüche, **dadurch gekennzeichnet, dass** die Borsten (9) bevorzugt überhaupt nicht oder zumindest nicht wesentlich in oder vor den Austrittsquerschnitt der Mündung (10) des Tüllenabschnitts (3) ragen.

6. Applikator (1) nach einem der vorhergehenden Ansprüche, **dadurch gekennzeichnet, dass** die Borsten (9) über ihre gesamte Länge (BL) hinweg einen im Wesentlichen runden Querschnitt aufweisen.

7. Applikator (1) nach einem der vorhergehenden Ansprüche, **dadurch gekennzeichnet, dass** die Mantelfläche der Borsten (9) kegelig ist, vorzugsweise mit einem Kegelwinkel zwischen 0,3 Grad und 2,5 Grad zur Längsachse der jeweiligen Borsten.

8. Applikator (1) nach einem der vorhergehenden Ansprüche, **dadurch gekennzeichnet, dass** zumindest die überwiegende Zahl der Borsten (9) und vorzugsweise alle Borsten eine Borstenlänge (BL) von höchstens 4,5 mm, vorzugsweise von höchstens 3,4 mm und idealerweise von höchstens 2,9 mm aufweisen.

9. Applikator (1) nach einem der vorhergehenden Ansprüche, **dadurch gekennzeichnet, dass** der Borstendurchmesser (BD) an der Borstenwurzel kleiner als die Wandstärke (WS) der borstentragenden Wand im Bereich der Borstenwurzel ist.

10. Applikator (1) nach einem der vorhergehenden Ansprüche, **dadurch gekennzeichnet, dass** die Mündung (10), wandungsinnenseitig gemessen, in einer ersten Richtung eine durchströmbare Breite (B) von ≥ 3 mm und ≤ 16 mm, besser 8 mm und idealerweise ≤ 6 mm aufweist.

11. Applikator (1) nach einem der vorhergehenden Ansprüche, **dadurch gekennzeichnet, dass** der Tüllenabschnitt (3) (bezogen auf seine, im Wesentlichen seiner Flüssigkeitsleitrichtung entsprechende Längsachse) in einem Winkel (α) von 15 bis 90 Grad vorzugsweise in einem Winkel (α) von 15 bis 50 Grad relativ zur Mittelachse des Verschlussstücks (2) von diesem abzweigt.

12. Applikator (1) nach einem der vorhergehenden Ansprüche, **dadurch gekennzeichnet, dass** der Tüllenabschnitt (3) wenigstens in einer Ebene derart flexibel ist, dass die Mündung des Tüllenabschnitts (3) unter dem Einfluss der bei der Applikation auftretenden Kräfte um einen Betrag von mindestens 1,5 mm, besser von mindestens 2 mm und idealerweise um mindestens 3 mm elastisch federnd nachgeben kann.

13. Applikator (1) nach einem der vorhergehenden Ansprüche, **dadurch gekennzeichnet, dass** der Applikator (1) vorzugsweise einschließlich der Borsten (9) aus LDPE, PA (Polyamid) oder PP (Polypropylen) gefertigt ist.

14. Applikator (1) nach einem der vorhergehenden Ansprüche, **dadurch gekennzeichnet, dass** der zum dichten Einführen in den Behälterhals oder die Pistolenkupplung vorgesehenene Rohrabschnitt (5) des Verschlussstücks (2) einen Außendurchmesser (RD) ≤ 9 mm besser ≤ 7.5 mm aufweist.

## Claims

1. An internally fed applicator (1) for applying a fluid having a closure piece (2) for a fixing, preferably a latching fixing, of the applicator (1) to a dispensing apparatus; and having an internally hollow spout section (3) which is connected to the closure piece (2) in a fluid conducting manner and which has at at least one of the borders bounding its free opening (10) a bristle stock (4) comprising bristles (9) which are injection molded to the spout section (3) and which each have a diameter of at most 0.8 mm and the fluid supplied via said spout section is output to said bristle stock,
wherein
the spout section (3) is designed as a flat passage whose width (B) which can be flowed through is substantially larger than its height (H) which can be flowed through, with the width (B) of the spout section increasing in at least one plane from the closure piece (2) to a free opening (10) of the spout section (3);
wherein the opening (10) has a width (MB) which can be flowed through of ≥ 2.5 mm and ≤ 25 mm, measured at the inner side of the wall.

2. An applicator (1) in accordance with claim 1, **characterized in that** the bristle stock (4) completely surrounds the opening (10).

3. An applicator (1) in accordance with one of the preceding claims, **characterized in that** at least the predominant number of the bristles (9) forming the bristle stock (4), preferably all the bristles, have a bristle center line which extends substantially in parallel with a center line (L2) of the spout section (3).

4. An applicator (1) in accordance with any one of the preceding claims, **characterized in that** at least one of the borders, but preferably all the borders, respectively has only one row of bristles (9) which are disposed next to one another along the respective border.

5. An applicator (1) in accordance with any one of the preceding claims, **characterized in that** the bristles (9) preferably do not project at all or at least do not substantially project into or in front of the outlet cross-section of the opening (10) of the spout section (3).

6. An applicator (1) in accordance with any one of the preceding claims, **characterized in that** the bristles (9) have a substantially round cross-section over their total length (BL).

7. An applicator (1) in accordance with any one of the preceding claims, **characterized in that** the jacket surface of the bristles (9) is conical, preferably with a conical angle of between 0.3 degrees and 2.5 degrees with respect to the longitudinal axis of the respective bristles.

8. An applicator (1) in accordance with any one of the preceding claims, **characterized in that** at least the predominant number of the bristles (9) and preferably all the bristles have a bristle length (BL) of at most 4.5 mm, preferably of at most 3.4 mm, and ideally of at most 2.9 mm.

9. An applicator (1) in accordance with any one of the preceding claims, **characterized in that** the bristle diameter (BD) at the bristle root is smaller than the wall thickness (WS) of the wall supporting the bristles in the region of the bristle root.

10. An applicator (1) in accordance with any one of the preceding claims, **characterized in that** the opening (10) has a width (B) which can be flowed through in a first direction of ≥ 3 mm and ≤ 16 mm, better ≤ 8 mm and ideally ≤ 6 mm, measured at the inner side of the wall.

11. An applicator (1) in accordance with any one of the preceding claims, **characterized in that** (with respect to its longitudinal axis substantially corresponding to its fluid conducting direction) the spout section (3) branches off from the closure piece (2) at an angle (α) of 15 to 90 degrees, preferably at an angle (α) of 15 to 50 degrees, relative to the center axis of said closure piece.

12. An applicator (1) in accordance with any one of the preceding claims, **characterized in that** the spout section (3) is flexible in at least one plane such that the opening of the spout section (3) can elastically resiliently yield by an amount of at least 1.5 mm, better of at least 2 mm and ideally by at least 3 mm under the influence of the forces arising on the application.

13. An applicator (1) in accordance with any one of the preceding claims, **characterized in that** the applicator (1), preferably including the bristles (9), is produced from LDPE, PA (polyamide) or PP (polypropylene).

14. An applicator (1) in accordance with any one of the preceding claims, **characterized in that** the tube section (5) of the closure piece (2) provided for the sealed insertion into the container neck or into the pistol coupling has an outer diameter (RD) of ≤ 9 mm, better ≤ 7.5 mm.

## Revendications

1. Applicateur (1) alimenté par l'intérieur pour appliquer un fluide, comportant un obturateur (2) pour l'immobilisation de l'applicateur (1) de préférence par enclenchement sur un dispositif de distribution, et une portion formant bec verseur (3) qui est creuse à l'intérieur et qui est en communication fluidique avec l'obturateur (2), portion qui présente sur l'un au moins de ses bords délimitant son embouchure libre (10) une garniture de poils (4) constituée de poils (9) rapportés par moulage par injection sur la portion formant bec (3) et présentant un diamètre maximum de 0,8 mm, garniture sur laquelle le fluide qui lui est amené est distribué,
dans lequel
la portion formant bec (3) est réalisée sous la forme d'un canal plat dont la largeur (B) traversable est sensiblement plus grande que sa hauteur (H) traversable, dans lequel la largeur (B) de la portion formant bec va en s'élargissant depuis l'obturateur (2) jusqu'à l'embouchure libre (10) de la portion formant bec (3) dans au moins un plan,
l'embouchure (10) présente une largeur traversable (MB), mesurée du côté intérieur de la paroi, de ≥ 2,5 mm et ≤ 25 mm.

2. Applicateur (1) selon la revendication 1, **caractérisé en ce que** la garniture de poils (4) entoure l'embouchure (10) tout autour.

3. Applicateur (1) selon l'une des revendications précédentes, **caractérisé en ce qu'**au moins la majorité des poils (9) formant la garniture de poils (4), de préférence tous les poils, présentent une ligne médiane de poils qui s'étend sensiblement parallèlement à la ligne médiane (L2) de la portion formant bec (3).

4. Applicateur (1) selon l'une des revendications précédentes, **caractérisé en ce que** l'un au moins des bords, de préférence tous les bords, ne présente(nt) qu'une seule rangée de poils (9) juxtaposés le long du bord respectif.

5. Applicateur (1) selon l'une des revendications précédentes, **caractérisé en ce que** les poils (9) ne dépassent de préférence pas du tout ou au moins ne dépassent pas sensiblement dans ou en avant de la section transversale de sortie de l'embouchure (10) de la portion formant bec (3).

6. Applicateur (1) selon l'une des revendications précédentes, **caractérisé en ce que** les poils (9) présentent une section transversale sensiblement ronde sur toute leur longueur (BL).

7. Applicateur (1) selon l'une des revendications précédentes, **caractérisé en ce que** la surface enveloppe des poils (9) est conique, de préférence avec un angle de cône compris entre 0,3 degré et 2,5 degrés par rapport à l'axe longitudinal des poils respectifs.

8. Applicateur (1) selon l'une des revendications précédentes, **caractérisé en ce qu'**au moins la majorité des poils (9) et de préférence tous les poils présentent une longueur de poil (BL) au maximum de 4,5 mm, de préférence au maximum de 3,4 mm, et idéalement de 2,9 mm au maximum.

9. Applicateur (1) selon l'une des revendications précédentes, **caractérisé en ce que** le diamètre des poils (BD) à la racine des poils est inférieur à l'épaisseur de paroi (WS) de la paroi portant les poils dans la zone de la racine des poils.

10. Applicateur (1) selon l'une des revendications précédentes, **caractérisé en ce que** l'embouchure (10) présente dans une première direction une largeur traversable (B) mesurée du côté intérieur de la paroi, qui est ≥ 3 mm et ≤ 16 mm, mieux ≤ 8 mm et idéalement ≤ 6 mm.

11. Applicateur (1) selon l'une des revendications précédentes, **caractérisé en ce que** la portion formant bec (3) (en relation avec son axe longitudinal correspondant sensiblement à sa direction de passage de liquide) dérive de l'obturateur (2) sous un angle (α) de 15 à 90 degrés, de préférence sous un angle (α) de 15 à 50 degrés par rapport à l'axe médian dudit obturateur (2).

12. Applicateur (1) selon l'une des revendications précédentes, **caractérisé en ce que** dans au moins un plan la portion formant bec (3) est si flexible que l'embouchure de la portion formant bec (3) est capable de céder élastiquement d'un montant d'au moins 1,5 mm, mieux d'au moins 2 mm et idéalement d'au moins 3 mm, sous l'influence des forces qui se produisent pendant l'application.

13. Applicateur (1) selon l'une des revendications précédentes, **caractérisé en ce que** l'applicateur (1) est fabriqué en LDPE, PA (polyamide) ou PP (polypropylène), de préférence y compris les poils (9).

14. Applicateur (1) selon l'une des revendications précédentes, **caractérisé en ce que** la portion tubulaire (5) de l'obturateur (2) prévu pour l'introduction étanche dans le goulot de récipient ou l'accouplement de type pistolet présente un diamètre extérieur (RD) ≤ 9 mm, mieux ≤ 7,5 mm.
